# EUROPÄISCHE PATENTSCHRIFT

(11) **EP 2 434 873 B1**
(45) Veröffentlichungstag und Bekanntmachung des Hinweises auf die Patenterteilung: **31.07.2013**
(21) Anmeldenummer: 10721965.1
(22) Anmeldetag: 07.05.2010
(51) Int. Cl.: A01N 1/02

(54) **VERFAHREN UND VORRICHTUNG ZUR KONSERVIERUNG VON ZELLKERNEN**
METHOD AND DEVICE FOR PRESERVING CELL NUCLEI
PROCÉDÉ ET DISPOSITIF DE CONSERVATION DE NOYAUX CELLULAIRES

(30) Priorität: 25.05.2009 DE 102009022580
(43) Veröffentlichungstag der Anmeldung: 04.04.2012
(73) Patentinhaber: Fraunhofer-Gesellschaft zur Förderung der angewandten Forschung e.V., 80686 München (DE)
(72) Erfinder: FUHR, Günter, R., 13187 Berlin (DE); ZIMMERMANN, Heiko, 66386 St. Ingbert (DE)
(74) Vertreter: Hertz, Oliver
(86) Internationale Anmeldenummer: PCT/EP2010/002816
(87) Internationale Veröffentlichungsnummer: WO 2010/136118

(56) Entgegenhaltungen:
- WO-A1-00/15032
- WO-A1-00/18882
- WO-A2-2008/011070
- US-A- 3 648 475
- US-A1- 2007 026 377
- SCHACK M L V ET AL: "The study of the cell nucleus using cryofixation and cryosubstitution", MICRON, PERGAMON, OXFORD, GB, Bd. 24, Nr. 5, 1. Januar 1993 (1993-01-01) , Seiten 507-519, XP024447367, ISSN: 0968-4328, DOI: 10.1016/0968-4328(93)90027-X [gefunden am 1993-01-01]

## Beschreibung

Die Erfindung betrifft ein Verfahren zur Konservierung von Zellkernen biologischer Zellen, insbesondere zur Kryokonservierung von Zellkernen, und gegebenenfalls von weiteren Zellbestandteilen, wie zum Beispiel Zellorganellen und/oder Zytoplasma, oder von entkernten biologischen Zellen. Die Erfindung betrifft des Weiteren eine Vorrichtung, die zur Durchführung eines derartigen Verfahrens und insbesondere zur Konservierung von Zellkernen biologischer Zellen und gegebenenfalls von weiteren Zellbestandteilen oder von entkernten biologischen Zellen konfiguriert ist. Die Erfindung betrifft auch ein Verfahren zur Regeneration oder Wiedergewinnung biologischer Zellen. Anwendungen der Erfindung ergeben sich insbesondere bei der Haltbarmachung und Lagerung von biologischen Materialien.

Die Kryokonservierung von biologischen Materialien, insbesondere von Gewebe, Zellgruppen, Zellen oder Zellbestandteilen, ist eine seit Jahrzehnten etablierte Technik mit zahlreichen Anwendungen in der Medizin, Biologie, Biotechnologie, Landwirtschaft, Lebensmittelindustrie und Umwelttechnik (siehe z. B. US 3 648 475 A und US 2002/0177119 A1). Obwohl biologische Zellen über lange Zeiträume, zum Beispiel Jahre oder Jahrzehnte, im gefrorenen Zustand gelagert werden und nach dem Auftauen ihre volle Vitalität zurückerlangen können, haben sich in der Praxis beschränkte Vitalitätsraten ergeben. Die Vitalitätsrate, d. h. der Anteil der nach dem Auftauen lebensfähigen Zellen, ist von der biologischen Art und vom Zelltyp abhängig und kann weniger als 1 % (z.B. bei Insekteneiern, Oozyten von Säugetieren, Fischen oder Reptilien) oder bis zu 95 % oder darüber (z.B. bei Fettzellen von Säugetieren) betragen. Eine Reihe von Zelltypen sind für die herkömmliche Kryokonservierung ungeeignet, da sie sich nicht einfrieren und revitalisieren lassen. Bei Tierzellen gilt dies besonders für Oozyten, während Pflanzenzellen wegen der Vakuolen in den Zellen häufig nicht lebenserhaltend eingefroren werden können. Probleme ergeben sich insbesondere für den Artenschutz, da für die meisten Arten eine Kryokonservierung von Spermien möglich ist, nicht jedoch von Oozyten. Z. He et al. ("Fertility and Sterility" Bd. 79, 2003, S. 347 ff.) beschreiben die Kryokonservierung von Kernmaterial aus Oozyten, wobei Polkörper und Pronuklei isoliert, in Gruppen in eine Zona pellucida umgesetzt und in dieser eingefroren werden. Dieses Verfahren ist auf die Kryokonservierung von Kernmaterial aus Oozyten beschränkt und aufgrund einer komplexen Präparation des Zellmaterials nachteilig.

Zur Kompensation von Verlusten durch Zellen, die nach dem Auftauen nicht mehr lebensfähig sind, werden in der Praxis möglichst viele Zellen einer zu konservierenden Probe, z.B. Millionen Zellen oder mehr, eingefroren. Mit der steigenden Zellzahl wächst jedoch die Größe der Kryoprobe und damit der Aufwand bei der Kryokonservierung und der Platzbedarf bei der Lagerung. Von Nachteil ist auch, dass bei speziellen Konservierungsaufgaben, wie zum Beispiel bei der Kryokonservierung von adulten Stammzellen oder von lebenswichtigen Eizellen oder Fusionsprodukten, wie zum Beispiel Hybridoma-Zellen, nur geringe Zellzahlen zur Verfügung stehen.

Ein weiteres, aus der Praxis bekanntes Problem der herkömmlichen Kryokonservierung besteht in der Abhängigkeit der Vitalitätsrate von den Bedingungen beim Einfrieren und späteren Auftauen der Zellen. Je mehr Teilschritte beim Einfrieren oder Auftauen durchlaufen werden und/oder je mehr Kryoschutzmittel verwendet werden, desto größer ist der Stress für die Zellen bei der Kryokonservierung. Da die Vitalitätsrate mit wachsendem Zellstress sinkt, besteht bisher der Trend, insbesondere beim Einfrieren möglichst wenig Teilschritte in möglichst kurzer Zeit auszuführen. So wurde vorgeschlagen, durch praktisch instantanes Einfrieren (Vitrifizierung) die Bildung von Eiskristallen im Zellmaterial zu unterbinden und damit den Zellstress zu minimieren. Von Nachteil ist jedoch, dass bisher in der Praxis erfolgte Ansätze zur Erhöhung der Vitalitätsrate nur spezifisch für bestimmte Zelltypen oder Probenarten erfolgreich, allgemein jedoch nicht mit der gewünschten Reproduzierbarkeit anwendbar waren.

Es wurde ferner vorgeschlagen, die Bildung von Eiskristallen zu unterdrücken, indem der Probe mindestens ein Kryoschutzmittel (Kryoprotektivum), wie zum Beispiel DMSO, Glyzerin, oder Trehalose zugegeben wird. Das Kryoprotektivum beeinflusst die Struktur der Eisbildung innerhalb und außerhalb der Zellen. Von Nachteil ist jedoch, dass die bisher verwendeten Kryoprotektiva die Zellen und die Vitalitätsrate nachteilig beeinflussen können, da sie in unphysiologisch hohen Konzentrationen (z. B. 5 bis 40%) zugegeben werden.
Ein weiterer Nachteil der herkömmlichen Kryoprotektiva besteht darin, dass diese eine beschränkte Fähigkeit haben, Zellmembranen zu durchdringen (beschränkte Membrangängigkeit). Da es für die Wirksamkeit von Kryoprotektiva bei der herkömmlichen Kryokonservierung wesentlich ist, dass diese passiv in die Zellen diffundieren können (zum Beispiel DMSO), sind bisher Substanzen mit beschränkter Membrangängigkeit als Kryoprotektiva ungeeignet.

Beispielsweise ist aus US 2005/0277107 A1 bekannt, zur Kryokonservierung biologischer Zellen durch deren Zellmembran Kryoprotektiva zuzuführen, um die Zellen zu dehydrieren, und die Zellen im dehydrierten Zustand einzufrieren. Die Anwendung dieses Verfahrens in der Praxis unterliegt Beschränkungen, da die Zufuhr der Kryoprotektiva so schonend erfolgen muss, dass die Zellen nach dem Auftauen wieder lebensfähig sind, und eine hohe Konzentration es Kryoprotektivums erforderlich ist, die nur von wenigen Zelltypen toleriert wird. Eine Kryobehandlung von Nukleinsäure-Molekülen unter Verwendung von Kryoprotektiva wird in WO 00/27361 A1 beschrieben.

Beim Einfrieren soll bisher möglichst schnell eine Kryokonservierungstemperatur erreicht werden, bei der keine Veränderungen innerhalb und außerhalb der Zellen auftreten, so dass die Zellen ohne Beschädigung erhalten werden können. Da bei Temperaturen oberhalb von -130°C noch Umkristallisierungen mikroskopischer Eisdomänen stattfinden können, erfolgen das Einfrieren und die Lagerung von Proben bei der herkömmlichen Kryokonservierung zur Erzielung einer hohen Vitalitätsrate bei Temperaturen unterhalb von -140°C, zum Beispiel bei -196°C (Temperatur des flüssigen Stickstoffs) oder bei -145°C bis -160°C in der kühlen Gasphase (Dampf des flüssigen Stickstoffs).

Die Aufgabe der Erfindung ist es, ein verbessertes Verfahren zur Kryokonservierung von biologischen Materialien bereitzustellen, mit dem Beschränkungen herkömmlicher Kryokonservierungsverfahren überwunden werden und das sich insbesondere durch einen erhöhten Anteil von vitalen Zellen auszeichnet, die nach der Kryokonservierung gewinnbar sind. Das Verfahren soll insbesondere mit hoher Zuverlässigkeit und Reproduzierbarkeit selbst mit kleinen Probenmengen und für Zelltypen, die für die herkömmliche Kryokonservierung ungeeignet sind, ausführbar sein. Die Aufgabe der Erfindung ist es auch, eine verbesserte Vorrichtung zur Kryokonservierung von biologischen Materialien bereitzustellen, mit der Nachteile herkömmlicher Vorrichtungen zur Kryokonservierung vermieden werden. Diese Aufgaben werden mit Verfahren bzw. Vorrichtungen zur Kryokonservierung mit den Merkmalen der unabhängigen Ansprüche gelöst. Vorteilhafte Ausführungsformen und Anwendungen der Erfindung ergeben sich aus den Merkmalen der abhängigen Ansprüche.

Verfahrensbezogen basiert die Erfindung auf der allgemeinen technischen Lehre, eine biologische Zelle (oder biologische Zellen) zunächst einer Präparation zu unterziehen, bei der auf die Zellmembran der biologischen Zelle invasiv eingewirkt wird. Abweichend von herkömmlichen Techniken, die auf eine Erhaltung der Zelle gerichtet sind, wird mit der Präparation die Zellmembran unterbrochen, wobei eine Beschädigung des Zytoplasmas der Zelle auftreten kann. Durch die Unterbrechung wird die Zellmembran derart verändert, dass die Zelle ihre Vitalität verliert. Die Unterbrechung der Zellmembran umfasst zum Beispiel eine Perforation, eine Zertrennung oder einen Abbau (Zerstörung). Vorteilhafterweise wird damit die gezielte Bereitstellung vorbestimmter physikalischer und/oder chemischer Bedingungen in der unmittelbaren Umgebung des Zellkerns erleichtert. Es werden derartige Bedingungen bereitgestellt, dass der Zellkern während der Kryokonservierung keinen Veränderungen ausgesetzt ist, welche die biologische Funktion des Zellkerns nach dessen Auftauen einschränken würden. Nach dem Auftauen kann der Zellkern in eine entkernte Zelle eingebracht werden, um eine vitale Zelle zu bilden. Somit können nach der Kryokonservierung vitale Zellen gewonnen (regeneriert oder wiedergewonnen) werden, was besonders für Zelltypen von Vorteil ist, die mit der herkömmlichen Technik nicht oder nur beschränkt kryokonserviert werden konnten.

Das erfindungsgemäße Kryokonservierungsverfahren zeichnet sich des Weiteren durch eine Dehydrierung des Zellkerns aus. Vorzugsweise wird ausschließlich der Zellkern dehydriert. Die Dehydrierung umfasst allgemein eine Verringerung des Wasseranteils im Zellkern. Vorteilhafterweise wird mit der Dehydrierung das bei der herkömmlichen Kryokonservierung auftretende Problem der Eiskristallbildung im Zellkern unterdrückt oder vollständig vermieden, da durch den verminderten Wasseranteil im Zellkern die Kristallbildung beim Einfrieren behindert ist. Diese Prozedur würde in einer intakten Zelle zur Zerstörung des Zytoplasmas führen. Die Dehydrierung des Zellkerns kann bereits während der Präparation der biologischen Zelle erfolgen oder alternativ nach der Präparation vorgesehen sein. Die Präparations- und Dehydrierungsschritte werden bei einer Zwischenlagerung des biologischen Materials ausgeführt, welche vorzugsweise bei einer höheren Temperatur als die anschließende dauerhafte Lagerung unter den Konservierungsbedingungen erfolgt.

Des Weiteren zeichnet sich das erfindungsgemäße Kryokonservierungsverfahren durch die Einstellung von Konservierungsbedingungen aus, unter denen der Zellkern dauerhaft lagerfähig sind. Die Einstellung der Konservierungsbedingungen umfasst insbesondere die Einstellung einer Konservierungstemperatur in einem Temperaturbereich, in dem keine Umkristallisierungen in den Zellkernen oder deren Umgebung auftreten, so dass sie dauerhaft unter Erhaltung ihrer Fähigkeit, Zellkerne lebender Zellen zu bilden, gelagert werden können. Da die Zellkerne durch die Dehydrierung einen im Vergleich zum natürlichen Zustand verminderten Wasseranteil enthalten oder vollständig wasserfrei sind, wird bei der Kryokonservierung jegliche unerwünschte Kristallbildung im Kernmaterial vermieden. Der Zellkern bleibt unverändert, so dass er nach der Kryokonservierung, insbesondere nach dem Auftauen auf Raumtemperatur seine Vitalität erhalten hat.

Die Erfindung basiert insbesondere auf den folgenden Überlegungen und experimentellen Ergebnissen der Erfinder. Untersuchungen haben ergeben, dass in Zellkernen biologischer Zellen, die der herkömmlichen Kryokonservierung unterzogen wurden, Eisdomänen gebildet werden. Obwohl bei der herkömmlichen Kryokonservierung ein Wassertransport aus dem Inneren der Zellen in deren Umgebung erfolgt, wurde bisher der Zellkern an diesem Wassertransport nicht beteiligt. Da Zellkerne durch eine Doppelmembran (Kernmembran) eingehüllt sind, können Zellkerne nur durch Poren in der Kernmembran entwässert werden. Zellkerne zeichnen sich daher durch eine osmotische Trägheit aus, aufgrund derer die Zellkerne bei der herkömmlichen Kryokonservierung nicht am Wassertransport nach außen beteiligt werden können. Hinzu kommt, dass das Zytoplasma osmotisch dem Zellkern gegenüber der Außenlösung vorgeschaltet ist. Dadurch wird die Trägheit verstärkt und somit die Kernentwässerung verschoben. Im Gegensatz zu dieser von den Erfindern festgestellten Charakteristik der herkömmlichen Verfahren wird mit dem Präparationsschritt die Lebensfähigkeit der Zelle als Gesamtheit aufgegeben, um in der unmittelbaren Umgebung des Zellkerns, d.h. auf der Außenseite der Kernmembran gezielt physikalische und/oder chemische Bedingungen so einstellen zu können, dass beim Dehydrierungsschritt ein Wassertransport aus dem Inneren des Zellkerns in dessen Umgebung erfolgt.

Die herkömmlichen Verfahren zur Kryokonservierung mit einer schonenden Behandlung der Zellen zur Erhaltung von deren Vitalität werden erfindungsgemäß durch die invasive Präparation mit einer Beschädigung der Zellmembran mit der anschließenden gezielten Dehydrierung des Zellkerns ersetzt. Mit dem Präparationsschritt kann die nachteilige Wirkung der osmotischen Trägheit des Zellkerns kompensiert werden. Mit der erfindungsgemäßen Kernentwässerung werden Eisdomänen im Kern und deren nachteilige Auswirkungen während der Lagerung im kryokonservierten Zustand vermieden.

Das erfindungsgemäße Verfahren zur Kryokonservierung ist nicht auf einen bestimmten Zelltyp beschränkt. Die Erfindung kann z. B. mit tierischen oder menschlichen Zellen, insbesondere Eizellen, Nervenzellen, Muskelzellen oder Immunzellen, wie Lymphozyten, Makrophagen oder Stammzellen, realisiert werden, ohne auf diese Zelltypen beschränkt zu sein. Vorzugsweise sind Zellen vorgesehen, die einen vollständig ausgebildeten Zellkern enthalten (keine Vorstufen von Kernmaterial).

Ein wichtiger Vorteil der Erfindung besteht darin, dass neue Substanzgruppen als Kryoprotektivum oder Dehydrierungssubstanz verwendet werden können, die für herkömmliche Verfahren zur Kryokonservierung wegen ihrer beschränkten Membrangängigkeit ungeeignet sind. Es können insbesondere Substanzen als Kryoprotektivum verwendet werden, die nicht membrangängig sind und für das Zytoplasma zu stark dehydrierend und schädigend sind. Wegen des Verzichts auf die Vitalität der zu konservierenden Zelle können z. B. organische Frostschutzproteine (AFP, Antifreeze-Proteine), wie z. B. Polypeptide der Gruppe AFP1 aus Fischen der Polarregion (z. B. Winterflunder oder arktischer Dorsch), oder AFP der Typen I bis IV, wie sie in Insekten, Amphibien oder Algen enthalten sind, oder Glycoproteine (AFGP), bei der erfindungsgemäßen Kryokonservierung als Kryoprotektivum oder Dehydrierungssubstanz verwendet werden.

Mit dem erfindungsgemäßen Verfahren wird der biologische Zustand der Zellkerne und somit ihre biologische Funktionsfähigkeit, Zellkerne lebender Zellen zu bilden, insbesondere vollständiges und unbeschädigtes genetisches Material zu enthalten, während der Kryokonservierung und dem Auftauen erhalten. Diese Funktionsfähigkeit wird hier auch als Vitalität der Zellkerne bezeichnet. Zur Gewinnung lebender Zellen kann nach dem erfindungsgemäßen Verfahren vorzugsweise ein Einführung der Zellkerne in Wirtzellen und deren Kultivierung nach an sich bekannten Verfahren vorgesehen sein, die z. B. von K. H. S. Campell et al. ("Nature" Bd. 380, 1996, S. 64 - 66), A. Baguisi et al. ("Nature Biotechnology" Bd. 17, 1999, S. 456 - 461), R. Briggs et al. ("Proceedings of the National Academy of Sciences of the United States of America" Bd. 38, 1952, S. 455-463) und P. Chesne et al. ("Nature Biotechnology" Bd. 20, 2002, S. 366 - 369) beschrieben sind.

Vorrichtungsbezogen wird die oben genannte Aufgabe durch die allgemeine technische Lehre gelöst, eine Kryokonservierungs-Vorrichtung bereitzustellen, die eine Präparationseinrichtung, die zur Ausführung des oben genannten Präparationsschrittes konfiguriert ist, und eine Dehydrierungseinrichtung aufweist, mit der Zellkerne der oben genannten Dehydrierung unterzogen werden können. Des Weiteren weist die erfindungsgemäße Kryokonservierungs-Vorrichtung eine Konservierungseinrichtung auf, mit der die Zellkerne in einen kryokonservierten Zustand überführbar sind.

Die Erfindung ist nicht auf die Dehydrierung und Konservierung von Zellkernen beschränkt. Gemäß einer bevorzugten Ausführungsform der Erfindung werden weitere Zellbestandteile, insbesondere Zellmembranen, Zytoplasma, Zellorganellen und/oder Teile von diesen der Dehydrierung und anschließend der Kryokonservierung unterzogen. Diese Schritte erfolgen getrennt von der Behandlung der Zellkerne. Vorteilhafterweise können damit für die einzelnen Zellbestandteile die physikalischen und/oder chemischen Bedingungen für die Kryokonservierung unter Erhaltung der biologischen Funktion der jeweiligen Zellbestandteile optimiert werden. So ist besonders bevorzugt vorgesehen, die Zellbestandteile voneinander isoliert zu dehydrieren und zu konservieren. Für diese Ausführungsform der Erfindung ist die erfindungsgemäße Kryokonservierung-Vorrichtung mit mehreren Dehydrierungseinrichtungen und mehreren Konservierungseinrichtungen ausgestattet, die jeweils für die Dehydrierung beziehungsweise Kryokonservierung bestimmter Zellbestandteile konfiguriert sind. Vorteilhafterweise können die weiteren Zellbestandteile bei der Regeneration oder Wiedergewinnung vitaler Zellen verwendet werden, indem sie mit den aufgetauten Zellkernen kombiniert werden.

Mit dem erfindungsgemäßen Präparationsschritt ist eine Schädigung oder Zerstörung wesentlicher Komponenten (insbesondere Zellmembran, Struktur des Zytoplasmas) der biologischen Zellen vorgesehen. Die Zellmembran wird so verändert, dass die Vitalität der Zelle verloren geht. Die Komponenten der Kernumgebung werden der besseren Erhaltung der Funktionsfähigkeit der Zellkerne geopfert (Verwendung als Opferschicht). Vorteilhafterweise bestehen verschiedene Varianten, die Präparation auszuführen.

Gemäß einer ersten Variante ist eine Abkühlung der biologischen Zellen vorgesehen. Die Abkühlung erfolgt mit einer derart eingestellten Kühlrate, dass die Zellmembran zerstört wird. Dabei ist die Probe vorzugsweise frei von Kryoprotektiva. Vorteilhafterweise können in diesem Fall die Präparation und die spätere Einstellung der Kryokonservierungsbedingungen mit einer einzigen Kühleinrichtung ausgeführt werden, deren Temperaturverlauf steuerbar ist.

Gemäß einer zweiten Variante umfasst die Präparation eine mechanische Zerstörung der Zellmembranen, zum Beispiel durch eine Zentrifugation oder eine elektrische Permeation. In diesem Fall wird vorteilhafterweise eine Abkühlung der Proben vor der Dehydrierung der Zellkerne vermieden.

Gemäß einer dritten Variante kann eine chemische Zerstörung der Zellmembranen (Lysieren), zum Beispiel unter Verwendung von Enzymen oder Detergenzien vorgesehen sein. Auch in diesem Fall wird vorteilhafterweise eine Abkühlung vor der Dehydrierung der Zellkerne vermieden.

Eine vierte Variante umfasst eine osmotische Zerstörung der Zellmembranen. Hierzu werden die biologischen Zellen einer Umgebung verminderten osmotischen Drucks ausgesetzt. Beispielsweise werden die biologischen Zellen in Wasser, vorzugsweise destilliertem Wasser, angeordnet, so dass die Zellen anschwellen und die Zellmembranen reißen (platzen). Durch die Wirkung des osmotischen Drucks dringt Wasser in die Zelle ein, wo es im Zytoplasma in der Umgebung des Zellkerns Eisdomänen bildet, die während der Dehydrierungsphase dem Zellkern Wasser entziehen.

Erfindungsgemäß kann vorgesehen sein, dass mindestens zwei der genannten Varianten kombiniert, insbesondere gleichzeitig oder aufeinanderfolgend ausgeführt werden.

Gemäß einer vorteilhaften Ausführungsform der Erfindung erfolgt bei der Präparation nicht nur eine Unterbrechung der Zellmembran, sondern eine Störung, zum Beispiel Beschädigung, Zerteilung, mindestens von Teilen des Zytoplasmas der biologischen Zellen in der Umgebung der Zellkerne. Vorteilhafterweise kann damit die Wirkung der Präparation verbessert und die Einstellung physikalischer und/oder chemischer Dehydrierungsbedingungen für die Zellkerne vereinfacht werden.

Gemäß einer weiteren, bevorzugten Ausführungsform der Erfindung umfasst die Präparation eine Kombination aus thermischer und mechanischer Einwirkung auf die biologischen Zellen. Es kann erfindungsgemäß eine Zerkleinerung von biologischem Zellmaterial, das die biologischen Zellen enthält, im gefrorenen Zustand vorgesehen sein. Die Zerkleinerung kann beispielsweise unter Verwendung von Ultraschall erfolgen. Die Erfinder haben festgestellt, dass bei der Einwirkung von Ultraschall auf gefrorenes Zellmaterial eine Beschädigung von Zellmembranen und Zytoplasma erzielt wird, während Zellkerne und optional weitere Zellbestandteile, wie zum Beispiel Zellorganellen, insbesondere Mitochondrien, erhalten bleiben.

Wenn gemäß einer weiteren Modifizierung der Erfindung eine Trennung der Zellkerne von anderen Bestandteilen der biologischen Zellen, insbesondere von den Zellmembranen und dem Zytoplasma vorgesehen ist, können sich Vorteile für die gezielte Dehydrierung der Zellkerne ergeben. Die Zellkerne können in einem von Zellbestandteilen freien Medium angeordnet werden, in dem die physikalischen und/oder chemischen Bedingungen der Dehydrierung einstellbar sind. Des weiteren kann eine Einhüllung der Zellkerne in eine Verkapselungssubstanz, wie zum Beispiel aus Alginat, vorgesehen seien. Damit wird ein zusätzlicher Schutz der Zellkerne bewirkt.

Die Erfinder haben festgestellt, dass verschiedene Verfahren zur Dehydrierung der Zellkerne verfügbar sind. Welches dieser Verfahren, die einzeln oder in Kombination, gleichzeitig oder aufeinanderfolgend, ausführbar sind, angewendet wird, kann in Abhängigkeit von der konkreten Konservierungsaufgabe, insbesondere in Abhängigkeit von den Zelltypen gewählt werden.

Gemäß einer ersten Variante umfasst die erfindungsgemäß angewendete Dehydrierung die Einstellung einer Dehydrierungstemperatur in der Umgebung der Zellkerne. Die Dehydrierungstemperatur ist so gewählt, dass Wasser in der Umgebung der Zellkerne gefriert und Eiskristalle bildet, wobei der Gefrierpunkt so geringfügig unterschritten wird, dass in den Eiskristallen eine Umkristallisierung erfolgt. Vorzugsweise wird die Dehydrierungstemperatur im Bereich unterhalb von 0°C, vorzugsweise unterhalb von -5 °C gewählt. Des Weiteren wird die Dehydrierungstemperatur vorzugsweise im Bereich oberhalb von -130 °C, z. B. oberhalb von -80°C, besonders bevorzugt oberhalb von -40°C gewählt. Bisher wurde dieser Temperaturbereich für Konservierungsverfahren nicht in Betracht gezogen, da davon ausgegangen wurde, dass für eine Lebenderhaltung von Zellmaterial tiefere Temperaturen notwendig seien. Die Umkristallisierung von Eisdomänen in der Umgebung der Zellkerne bedeutet die Bildung mikroskopischer Bereiche flüssigen Wassers oder sich verändernder Eiskristalle, welche einen osmotischen Druck auf das in den Zellkernen befindliche Wasser ausüben. Im Ergebnis wird Wasser aus den Zellkernen durch deren Kernmembran in die Umgebung der Zellkerne transportiert. Große Eiskristalle wachsen dann auf Kosten kleinerer Eiskristalle. Dieses Phänomen wird auch als "migratorisches Wachstum" bezeichnet. Der genannte Temperaturbereich hat ferner den Vorteil, dass die Kryokonservierungs-Vorrichtung kostengünstig, insbesondere mit einer Peltier-Kühlung erfolgen kann.

Die Einstellung der Dehydrierungstemperatur kann eine Variation der Temperatur in der Umgebung der Zellkerne einschließen. Vorteilhafterweise kann ein Dehydrierungstemperaturzyklus eingestellt werden, in dessen zeitlichen Verlauf die Dehydrierungstemperatur im genannten Temperaturbereich mehrfach vergrößert und verringert wird. Damit wird die Umkristallisation in der Umgebung der Zellkerne stimuliert. Vorteilhafterweise wird damit die Dehydrierung der Zellkerne gefördert. Alternativ oder zusätzlich kann der Dehydrierungstemperaturzyklus eine oder mehrere Temperaturerhöhung(en) bis oberhalb des Schmelzpunkts der gefrorenen Probe, insbesondere oberhalb von 0°C umfassen. In diesem Fall enthält der Dehydrierungstemperaturzyklus Phasen, in denen die Umgebung der Zellkerne vollständig aufgetaut ist. Während der Tauphasen des Dehydrierungstemperaturzyklus kann der osmotische Druck auf die Zellkerne erhöht und der Wassertransport in die Umgebung verstärkt werden. Des Weiteren kann vorteilhafterweise während der Tauphasen ein Stoffaustausch in der Umgebung der Zellkerne vorgesehen sein. In diesem Fall wird im Dehydrierungstemperaturzyklus die Temperatur der Probe zeitweilig erhöht, so dass die Umgebung der Zellkerne flüssig ist. In diesem Zustand kann der Umgebung der Zellkerne eine Substanz zugesetzt werden, mit der die Dehydrierung gefördert wird. Dieser Prozess kann durch die Zugabe von Substanzen unterstützt werden, die den Gefrierpunkt erniedrigen, wie zum Beispiel hochmolekulare Substanzen, insbesondere Dextran oder Elektrolyte.

Gemäß einer zweiten Variante der erfindungsgemäß angewendeten Dehydrierung wird in der Umgebung der Zellkerne eine Dehydrierungssubstanz angeordnet, welche die Dehydrierung der Zellkerne bewirkt. Die Dehydrierung mit einer Dehydrierungssubstanz kann vorteilhafterweise bei Raumtemperatur ausgeführt werden. Als Dehydrierungssubstanzen stehen verschiedene Substanzgruppen zur Verfügung, die Alkohole, Proteine, Zucker, Elektrolyte und/oder Polymere umfassen und sich jeweils durch die Bildung eines osmotischen Potentials gegenüber dem Inneren der Zellkerne auszeichnen. Die Konzentration der Dehydrierungssubstanz kann in Abhängigkeit von den konkreten Verfahrensbedingungen z. B. durch Tests oder durch Verwendung von bekannten osmotischen Parametern der Substanzen (Tabellenwerte) gewählt werden.

Gemäß einer dritten Variante der erfindungsgemäß angewendeten Dehydrierung wird in der Umgebung der Zellkerne eine Stabilisierungssubstanz bereitgestellt, die durch die Kernmembran in die Zellkerne eindringt und in diesen Wasser verdrängt. Als Stabilisierungssubstanz ist jede Substanz verwendbar, die in der molekularen Umgebung im Inneren der Zellkerne eine höhere thermodynamische Stabilität als außerhalb der Zellkerne und als das Wasser in den Zellkernen aufweist. Vorteilhafterweise stehen verschiedene Substanzgruppen zur Verfügung, die insbesondere Alginate, Nanopartikel, Matrizen, Zellulose, Polymere und/oder Gele umfassen. Auch die Konzentration der Stabilisierungssubstanz kann in Abhängigkeit von den konkreten Verfahrensbedingungen gewählt werden.

Wenn gemäß einer weiteren vorteilhaften Ausführungsform der Erfindung die Dehydrierung erfolgt, während in der Umgebung der Zellkerne noch die Zellbestandteile (insbesondere Zellmembran, Zytoplasma) der Zellen angeordnet sind, können sich Vorteile für die Kombination der Präparations- und Dehydrierungsschritte und deren Ausführung in einer kombinierten Präparations- und Dehydrierungseinrichtung ergeben. Alternativ kann erfindungsgemäß vorgesehen sein, die Dehydrierung auszuführen, nachdem die Zellkerne von den übrigen Zellbestandteilen getrennt wurden. In diesem Fall ergeben sich Vorteile für die besonders effektive Einstellung der Dehydrierungsbedingungen.

Gemäß einer weiteren vorteilhaften Variante der Erfindung kann während der Präparation und/oder der Dehydrierung in der Umgebung der Zellkerne mindestens ein Kryoprotektivum vorhanden sein. Im Unterschied zu herkömmlichen Techniken wird das Kryoprotektivum so zugeführt und dosiert, dass es ausschließlich für einen Schutz des Zellkerns wirkt. Beispielsweise wird einem Medium in der Umgebung der Zellen Kryoprotektivum mit einem Anteil von weniger als 5 vol.-%, vorzugsweise weniger als 3 vol.-%, z. B. 1 vol.-% oder weniger bereitgestellt. Die Zufuhr des Kryoprotektivums kann bei physiologischen Temperaturen, insbesondere oberhalb von 10°C und/oder unterhalb von 38 °C, erfolgen.

Die erfindungsgemäße Einstellung von Konservierungsbedingungen für die Zellkerne umfasst vorzugsweise die Einstellung einer Lagertemperatur, bei der eine Umkristallisierung von Eisdomänen unterdrückt oder ausgeschlossen ist. Es wird vorzugsweise eine Lagertemperatur unterhalb von -80°C, besonders bevorzugt unterhalb von -130°C eingestellt. Vorteilhafterweise wird damit ein eventueller Schaden durch mikroskopische Restdomänen von Wasser in den Zellkernen ausgeschlossen. Des Weiteren stimmt die Lagertemperatur vorteilhafterweise mit üblichen Endtemperaturen der herkömmlichen Kryokonservierung überein, so dass erfindungsgemäß präparierte und dehydrierte Zellkerne gemeinsam mit herkömmlich bearbeitetem Zellmaterial in einer gemeinsamen Konservierungseinrichtung aufgenommen werden können.

Gemäß weiteren Modifizierungen des erfindungsgemäßen Verfahrens können die Zellkerne einer Verdichtung oder einer Einzelablage unterzogen werden. Im Fall der Verdichtung erfolgt eine Konzentration der Zellkerne. Die Zellkerne sind für die Kryokonservierung mit einer erhöhten Raumdichte angeordnet. Vorteilhafterweise kann damit die Effektivität der Lagerung erhöht werden. Bei der alternativ vorgesehenen Einzelablage werden die Zellkerne vereinzelt und voneinander getrennt gelagert. In diesem Fall ergeben sich Vorteile aus der Möglichkeit, einzelne Zellkerne einer Probe aufzutauen und einer weiteren Anwendung zuzuführen.

Ein besonderes Merkmal der Erfindung besteht in der Verwendung von Substanzen, welche eine Vergrößerung und Umkristallisation von Eisdomänen in der Umgebung von Zellkernen fördern, als Kryoprotektiva. Die erfindungsgemäßen Kryoprotektiva zeichnen sich dadurch aus, dass sie nicht kernmembrangängig sind und in der Umgebung des Kerns die Größe von Eisdomänen nicht verringern. Weitere Eigenschaften der erfindungsgemäßen Kryoprotektiva bestehen darin, dass sie osmotisch wirksam sind und/oder eine Entmischung der flüssigen Umgebung des Kerns in Eiskristalle und aufkonzentrierte Substanzen bewirken. Bei herkömmlichen Kryokonservierungsverfahren sind derartige Substanzen, wie zum Beispiel Alkohole, Proteine, Zucker, Elektrolyte, Polyanionen, Polykationen, Polymere, Öle oder Gele gerade nicht als Kryoprotektiva geeignet, da bei den herkömmlichen Verfahren die Eisdomänen möglichst klein und stabil gehalten werden sollen. Die Verwendung der genannten Substanzen als Kryoprotektiva stellt damit einen unabhängigen Gegenstand der Erfindung dar.

Weitere Einzelheiten und Vorteile der Erfindung werden im Folgenden unter Bezug auf die beigefügten Zeichnungen beschrieben. Es zeigen:
- Figur 1:: eine schematische Illustration von Verfahrensschritten, die bei bevorzugten Ausführungsformen des erfindungsgemäßen Verfahrens vorgesehen sind;
- Figuren 2 bis 4:: schematische Illustrationen von drei Ausführungsformen der erfindungsgemäßen Kryokonservierung von Zellkernen;
- Figuren 5 und 6:: schematische Illustrationen der Dehydrierung und der dauerhaften Lagerung von Zellkernen gemäß der Erfindung;
- Figur 7:: eine schematische Illustration der Erzeugung vitaler Zellen unter Verwendung eines Kerntransfer-Verfahrens; und
- Figur 8:: eine schematische Illustrationen einer Ausführungsform der erfindungsgemäßen Kryokonservierungs-Vorrichtung.

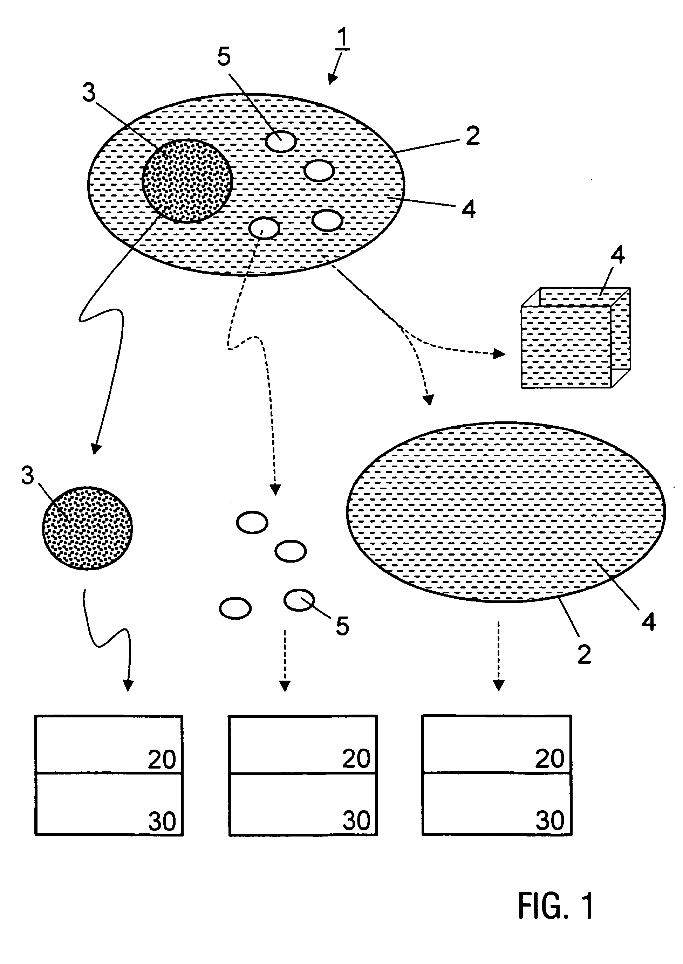

Eine biologische Zelle 1 umfasst als Zellbestandteile allgemein die Zellmembran 2, den Zellkern 3, das Zytoplasma 4 und Zellorganellen 5, wie zum Beispiel Mitochondrien, endoplasmatisches Retikulum oder den Golgi-Apparat. Bei der herkömmlichen Kryokonservierung werden ganze Zellen schonend eingefroren. Dazu im Gegensatz werden bei dem erfindungsgemäßen Verfahren, wie in Figur 1 schematisch illustriert ist, biologische Zellen 1 so behandelt, dass die Zellmembran 2 unterbrochen und damit die Zelle 1 zerstört wird. Die Zellbestandteile 2, 3, 4 und 5 können mit an sich bekannten Isolationsverfahren voneinander getrennt werden. Von den Zellbestandteilen werden mindestens der Zellkern 3, optional jedoch auch die Zellmembran 2, das Zytoplasma 4, Zellorganellen 5 und/oder Teile von diesen der Dehydrierung und Kryokonservierung unterzogen.

Im Präparationsschritt wird die Zelle 1 gemäß einer der unten erläuterten Varianten bearbeitet. Anschließend wird der Zellkern 3 in einer Umgebung von Bestandteilen der zerstörten Zelle in der schematisch gezeigten Dehydrierungseinrichtung 20 dehydriert und anschließend in der Konservierungseinrichtung 30 konserviert. Optional können die Zellorganellen 5, entkernte Zellen (umfassend die Zellmembran 2 und das Zytoplasma 4 ohne den Zellkern) und/oder Teile des Zytoplasmas 4, gegebenenfalls mit Zellorganellen 5 oder Teilen von diesen der Dehydrierung und folgenden Konservierung unterzogen werden. Dabei können gezielt Verfahrensbedingungen eingestellt werden, die spezifisch an die jeweiligen Zellbestandteile angepasst sind. Beispielsweise können Mitochondrien wie Zellkerne behandelt werden, wobei eine Dehydrierung vorgesehen ist und das Innere der Mitochondrien frei von Kryoprotektiva bleibt. Bei der Kryokonservierung von endoplasmatischem Retikulum oder Golgi-Apparat hingegen ist der Zusatz von Stabilisierungssubstanzen, wie z. B. Alginat oder Polyelektrolyten vorgesehen, insbesondere um diese besonders empfindlichen Zellbestandteile zu stabilisieren. Zellmembranen können in einer wässrigen Lösung verdichtet werden, um bei der Konservierung eine kompakte Packung zu erhalten.

Typischerweise umfasst die biologische Probe, welche dem erfindungsgemäßen Verfahren unterzogen wird, eine Vielzahl biologischer Zellen 1, so dass gleichzeitig Zellkerne 3 in der Umgebung von Zellbestandteilen dehydriert und konserviert und andere Zellbestandteile isoliert dehydriert und konserviert werden. Dabei ist es vorteilhafterweise möglich, dass gleiche Zellbestandteile von verschiedenen Zellen gemeinsam einfroren werden.

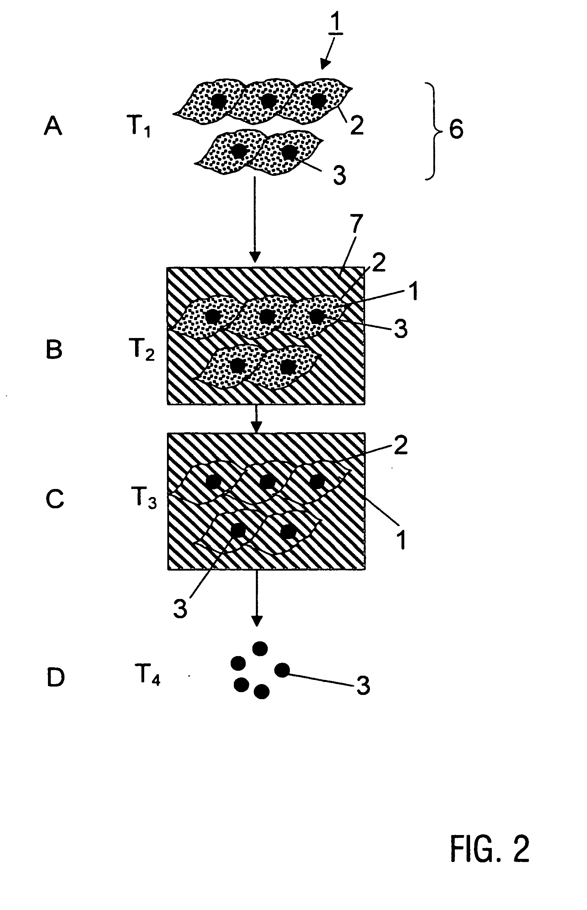

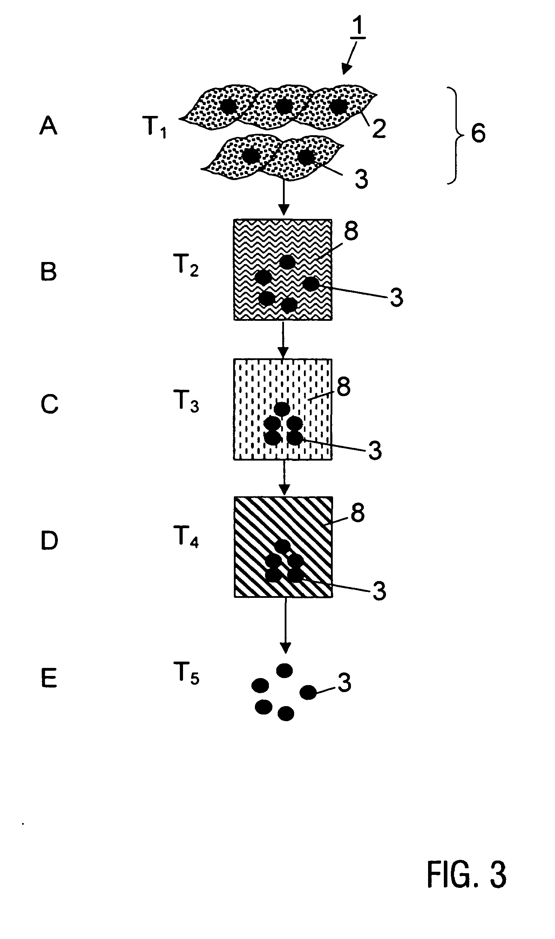

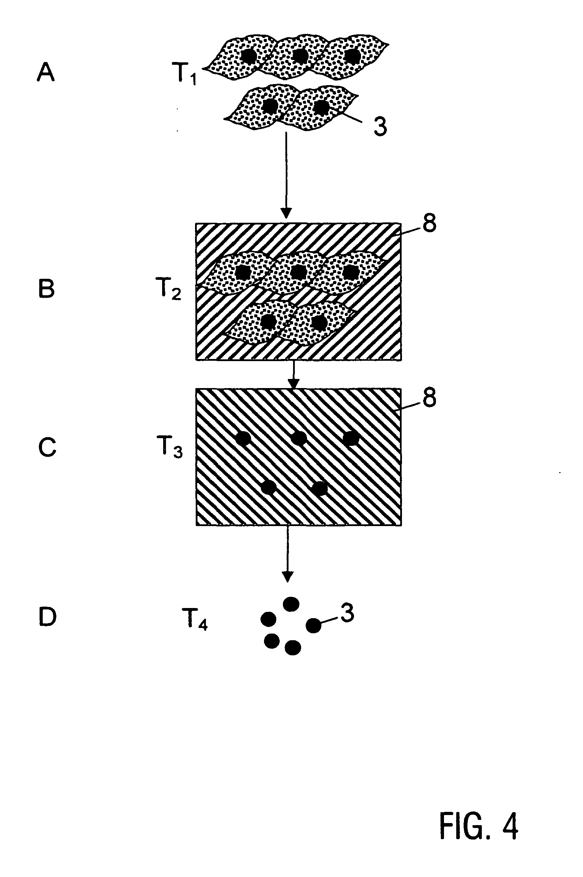

Bevorzugte Ausführungsformen der erfindungsgemäßen Kryokonservierung der Zellkerne werden im Folgenden unter Bezug auf drei Verfahrensmöglichkeiten erläutert. Diese umfassen erstens eine Behandlung der Zellkerne in situ, das heißt in den Zellen und/oder im Zellverband (Figur 2), zweitens eine Behandlung der Zellkerne nach deren Isolation aus den Zellen und/oder deren Trennung aus dem Zellverband (Figur 3) und drittens die Behandlung der Zellkerne innerhalb der Zellen mit einer anschließenden Trennung der Zellkerne von den Zellen (Figur 4). Es wird betont, dass die Umsetzung der Erfindung nicht auf diese Schemata beschränkt ist, sondern weitere Verfahrensschritte einschließen kann. Weitere Verfahrensschritte können physikalische und/oder chemische Behandlungen, wie zum Beispiel Temperaturerhöhungen oder -verringerungen, mechanische Bearbeitungen oder Wechsel von Umgebungsmedien umfassen. Des Weiteren kann die Behandlung der anderen Zellbestandteile wie die Behandlung der Zellkerne erfolgen.

Die Erfindung wird insbesondere unter Bezug auf Einzelheiten der Präparations- und Dehydrierungsschritte erläutert. Weitere Einzelheiten, zum Beispiel der dauerhaften Konservierung, werden nicht erläutert, da diese an sich von herkömmlichen Kryokonservierungsverfahren bekannt sind.

Für die in situ Kryokonservierung von Zellkernen zeigt Figur 2A zunächst die Bereitstellung einer Probe, welche die Zellen 1 mit den Zellmembranen 2 und den Zellkernen 3 enthält. Die Zellen 1 liegen vereinzelt und in einer Suspensionslösung suspendiert oder als Zellzusammensetzung 6 (Gewebe oder Gewebeteil) in einem Kultivierungsmedium vor. Die Bereitstellung der Zellen 1 erfolgt bei einer ersten Temperatur T₁ oberhalb des Gefrierpunkts der Probe, insbesondere oberhalb des Gefrierpunkts von Wasser (0 °C). Die erste Temperatur T₁ ist so gewählt, dass weder die Zellen 1 noch deren Umgebungsmedium (Suspensionslösung und/oder Kultivierungsmedium) gefroren sind. In diesem Zustand kann den Zellen 1 oder der Zellzusammensetzung 6 eine Dehydrierungs- und/oder Stabilisierungssubstanz zugesetzt werden.

Die Zellen umfassen vorzugsweise tierische oder menschliche Zellen, insbesondere Eizellen, Nervenzellen, Muskelzellen oder Immunzellen, wie Lymphozyten, Makrophagen oder Stammzellen. In einer konkreten Ausführungsform umfassen die Zellen 1 zum Beispiel Muskel- oder Nerven-Zellen in einer physiologischen Kultivierungslösung. Es wird beispielsweise ein Probenvolumen von 1 bis 100 µl mit etwa 10 bis 10000 Zellen bereitgestellt.

Anschließend erfolgen die erfindungsgemäßen Präparations- und Dehydrierungsschritte bei einer zweiten Temperatur T₂ (Zwischenlagerungstemperatur) unterhalb des Gefrierpunkts der Probe, insbesondere unterhalb des Gefrierpunkts von Wasser (Figur 2B). Bei der zweiten Temperatur T₂ sind die Zellen 1 mit den Zellkernen 3 und das Umgebungsmedium 7 gefroren. Bei der Abkühlung der Probe in den Temperaturbereich von -5°C bis -80°C, zum Beispiel etwa -20°C werden die Zellmembranen 2 zerstört. Die Zerstörung der Zellmembranen 2 wird dadurch bewirkt, dass im genannten Temperaturbereich in der Umgebung der Zellen 1 Eiskristalle wachsen und umgeordnet werden, wobei eine Permeation der Zellmembranen erfolgt. Gleichzeitig sind die Zellkerne 3 durch das umgebende Zytoplasma geschützt, so dass die Kernmembranen der Zellkerne 3 nicht gestört, sondern erhalten bleiben.

Bei der zweiten Temperatur T₂ wird durch die Zerstörung der Zellmembranen 2 und die Störung der Struktur des Zytoplasmas der Zellen 1 ermöglicht, dass Wasser aus den Zellkernen 3 in deren Umgebung transportiert wird. Die Dehydrierung erfolgt somit gleichzeitig mit der Präparation. Des Weiteren kann als eine Stabilisierungssubstanz, z. B. ein Elektrolyt, das z.B. K⁺, Cl⁻, Na⁺, und/oder Ca²⁺-Ionen enthält; ein anionisches oder kationisches Polyelektrolyt, z.B. Pektine, Alginate, Polysaccharide, Polyacrylsäure, Polyethylenimin, Polyvinylamin, Polyvinylpyridin, Biopolymere (wie DNA); Dextran oder Zucker aus dem Umgebungsmedium 7 in die Zellkerne 3 diffundieren, um dort eingebautes Wasser zu ersetzen. Das ersetzte Wasser tritt in die Umgebung der Zellkerne 3 aus.

Es kann eine fest eingestellte zweite Temperatur T₂ gewählt werden. Alternativ können Temperaturprogramme mit steigenden und fallenden Temperaturen im genannten Intervall ausgeführt werden. Es kann vorgesehen sein, zumindest das Umgebungsmedium 7 zeitweilig aufzutauen (Temperatur insbesondere oberhalb des Gefrierpunkts von Wasser), um dem Umgebungsmedium 7 Dehydrierungs- und/oder Stabilisierungssubstanzen zuzusetzen oder zu entfernen.

Die Dauer der Präparations- und Dehydrierungsschritte bei der zweiten Temperatur T₂ hängt von der gewählten Temperatur und/oder dem gewählten Temperaturverlauf sowie von Probeneigenschaften, wie zum Beispiel der Probengröße und der Zahl der Zellkerne 3 ab. Die Dauer der Präparations- und Dehydrierungsschritte beträgt mindestens eine halbe Stunde, kann aber auch mindestens 1 Stunde, 5 Stunden, 24 Stunden oder mehr, zum Beispiel 2 Tage oder mehr oder sogar Monate bis zu Jahre betragen. Generell stellen die Präparations- und Dehydrierungsschritte bei der zweiten Temperatur T₂ somit eine Zwischenlagerung dar, bei der sich die Umgebung der Zellkerne 3 insbesondere durch Umkristallisierungen dynamisch verändert, um die Dehydrierung der Zellkerne 1 zu bewirken.

Anschließend erfolgt die Einstellung von Konservierungsbedingungen, unter denen die Zellkerne 3 dauerhaft einen unveränderlichen, kryokonservierten Zustand aufweisen (Figur 2C). Hierzu wird eine dritte Temperatur T₃ (Lagertemperatur) eingestellt, die unterhalb von -80°C, vorzugsweise unterhalb von -130°C gewählt ist. Bei diesen Temperaturen sind jegliche Umkristallisierungsprozesse in der Umgebung der Zellkerne 3 unterbunden, so dass sich die Zellkerne 3 und ihre Bestandteile, insbesondere DNA-Komponenten nicht mehr verändern. Während der Lagerung bei der dritten Temperatur T₃ existieren die Reste der biologischen Zellen 1 in der Umgebung der Zellkerne 3 noch. Im Unterschied zur herkömmlichen Kryokonservierung vitaler Zellen sind die Zellmembranen 2 jedoch stark permeiert oder vollständig zerstört und die Zytoplasmastruktur stark verändert (zum Beispiel entmischt oder mit Eisdomänen versetzt) oder vollständig zerstört (Funktion des Zytoplasmas als "Opferschicht").

Figur 2D illustriert schematisch die Rückgewinnung der Zellkerne 3 nach der Kryokonservierung. Hierzu werden die Zellkerne 3 auf eine vierte Temperatur T₄ erwärmt und aufgetaut. Die vierte Temperatur T₄ ist vorzugsweise oberhalb von -5°C, besonders bevorzugt oberhalb von 0°C gewählt. Auch beim Übergang von der dritten Temperatur T₃ zur vierten Temperatur T₄ können Temperaturwechsel mit steigenden und fallenden Temperaturen vorgesehen sein, um die Zellkerne 3 einer Rehydrierung zu unterziehen.

Bei der in Figur 3 illustrierten Ausführungsform des erfindungsgemäßen Verfahrens werden die Zellen 1 mit den Zellkernen 3 bei einer ersten Temperatur T₁ oberhalb des Gefrierpunkts der Probe, insbesondere oberhalb von 0°C, bereitgestellt (Figur 3A) und einer Trennung der Zellkerne 1 von den übrigen Zellbestandteilen unterzogen. Die Trennung umfasst an sich bekannte Verfahren, wie zum Beispiel eine Zentrifugation in einem Dichtegradienten, wobei die Zellmembranen 2 zerstört und die Zellkerne 3 isoliert werden. In einer Fraktion werden die Zellkerne 3 verdichtet. Im Ergebnis liegt eine Probe mit einem Volumen von zum Beispiel 1 bis 10 µl mit 1 bis 1000 Zellkernen 3 vor.

Danach erfolgt die Dehydrierung der Zellkerne 3, indem die isolierten Zellkerne 3 zunächst in ein Einfriermedium 8 eingeführt werden (Figur 3B). Das Einfriermedium 8 ist eine physiologische Lösung, die Substanzen enthält, wie zum Beispiel Elektrolyte, Serum, Glukose oder Proteine, die das Einfrieren der Zellkerne 3 fördern. Zusätzlich kann das Einfriermedium 8 herkömmliche Kryoprotektiva enthalten. Die Zuführung in das Einfriermedium erfolgt bei einer zweiten Temperatur T₂, die oberhalb des Gefrierpunkts des Einfriermediums 8 gewählt ist.

Anschließend wird die Suspension der Zellkerne 3 im Einfriermedium 8 auf eine dritte Temperatur T₃ abgekühlt (Zwischenlagerung, Figur 3C). Die dritte Temperatur T₃ ist im Bereich von -5°C bis -80°C, vorzugsweise bei -20°C gewählt, wobei wie bei der Ausführungsform gemäß Figur 2 temporäre Temperaturwechsel in diesem Temperaturintervall vorgesehen sein können. Des Weiteren können Auftauphasen vorgesehen sein, bei denen die Temperatur oberhalb des Gefrierpunkts des Einfriermediums 8 gewählt ist. Während der Zwischenlagerung bei der dritten Temperatur T₃ erfolgt eine Umkristallisierung in der Umgebung der Zellkerne 3, eine Dehydrierung der Innenräume der Zellkerne 3 und gegebenenfalls eine Diffusion von Stabilisierungssubstanzen in die Zellkerne 3. Hierzu kann die Dauer der Zwischenlagerung, wie oben zu Figur 2 erwähnt, in Abhängigkeit von dem Temperaturprogramm und/oder Eigenschaften der Probe gewählt sein. Die Eisbildung kann durch eine Vibration oder durch die Applikation von Ultraschall zu bestimmten Zeitpunkten induziert werden. Optional kann während der Zwischenlagerung bei der dritten Temperatur T₃ ein Wasserentzug aus dem gefrorenen oder temporär aufgetauten Einfriermedium vorgesehen sein. Im gefrorenen Zustand kann zum Beispiel eine Sublimation in einer Umgebung reduzierten Druckes, zum Beispiel im Vakuum, vorgesehen sein.

Anschließend erfolgt die Lagerung bei der Lagertemperatur T₄, die zum Beispiel unterhalb von -130°C gewählt ist (Figur 3D). Eine höhere Lagertemperatur T₄ zum Beispiel im Bereich von -80°C bis -130°C kann insbesondere eingestellt werden, wenn vorher aus dem Einfriermedium 6 Wasser, z. B. durch Sublimation, entfernt wurde. Schließlich illustriert Figur 3E die Rückgewinnung der Zellkerne 3 durch eine Erwärmung auf die erhöhte Temperatur T₅ oberhalb des Gefrierpunkts des Einfriermediums 8.

Figur 4 illustriert die Ausführungsform der Erfindung, bei der die Präparation und Dehydrierung an den Zellkernen 3 unter in situ-Bedingungen ausgeführt werden und anschließend eine Trennung der Zellkerne 3 vom übrigen Zellmaterial erfolgt. Zunächst erfolgen die Präparation und Dehydrierung, wie dies oben unter Bezug auf Figur 2 beschrieben wurde (Figuren 4A, 4B). Bei der zweiten Temperatur T₂, die zum Beispiel im Bereich von -20°C bis -196°C gewählt ist, erfolgt eine mechanische Behandlung der gefrorenen Probe, zum Beispiel durch die Einwirkung von Ultraschall oder durch die mechanische Zerkleinerung durch Werkzeuge oder andere Vibrationen. Dabei können die Zellkerne 3 von den übrigen Zellkomponenten getrennt werden. Anschließend erfolgt bei der dritten Temperatur T₃, die im Bereich von 0°C bis -80°C gewählt ist, eine weitere Dehydrierung der Zellkerne 1. Bei der dritten Temperatur T₃ können zum Beispiel Dehydrierungssubstanzen und/oder Stabilisierungssubstanzen dem Einfriermedium 8 zugesetzt oder aus diesem Wasser entfernt werden. Schließlich illustrieren die Teilbilder C und D von Figur 4 die dauerhafte Lagerung der dehydrierten Zellkerne und deren spätere Rückgewinnung (siehe Figuren 2, 3).

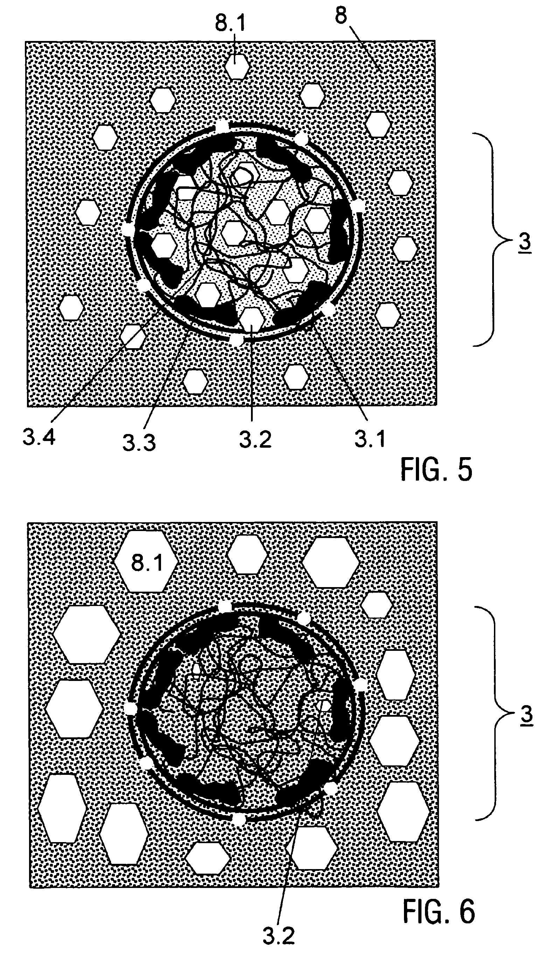

Die Figuren 5 und 6 illustrieren schematisch die Vorgänge, welche bei der erfindungsgemäßen Dehydrierung der Zellkerne bei der Zwischenlagerungstemperatur ablaufen. In Figur 5 sind die Bedingungen zu Beginn der Zwischenlagerung schematisch illustriert. Es ist ein einzelner Zellkern 3 gezeigt, der von einer Kernmembran 3.1 (Doppelmembran) umgeben in dem Einfriermedium 8 angeordnet ist. Im Inneren des Zellkerns 3 befinden sich Wasseranteile 3.2, Chromatin 3.3 und DNA 3.4 (im Histon-adhärierten Zustand). Die Wasseranteile 3.2 können im flüssigen Zustand oder bereits im gefrorenen Zustand sein. Außerhalb des Zellkerns 3 befinden sich ebenfalls Wasseranteile 8.1 im Einfriermedium 8, die im flüssigen (gelösten) oder gefrorenen Zustand sein können.

Figur 6 zeigt die Situation nach einer mehrmonatigen Zwischenlagerung. Im Ergebnis der Dehydrierung des Zellkerns 3 sind die Wasseranteile 3.2 im Inneren des Zellkerns nahezu oder vollständig entfernt, während die Wasseranteile 8.1 im Einfriermedium 8 gewachsen sind. Gleichzeitig können Stabilisierungssubstanzen in das Innere des Zellkerns 3 diffundiert sein. Figur 6 zeigt den wesentlichen Unterschied der Erfindung gegenüber herkömmlichen Verfahren derart, dass in der Umgebung der Zellkerne 3 das Wachstum von großen, das Innere der Zellkerne 3 dehydrierenden Eisdomänen 8.1 induziert wird.

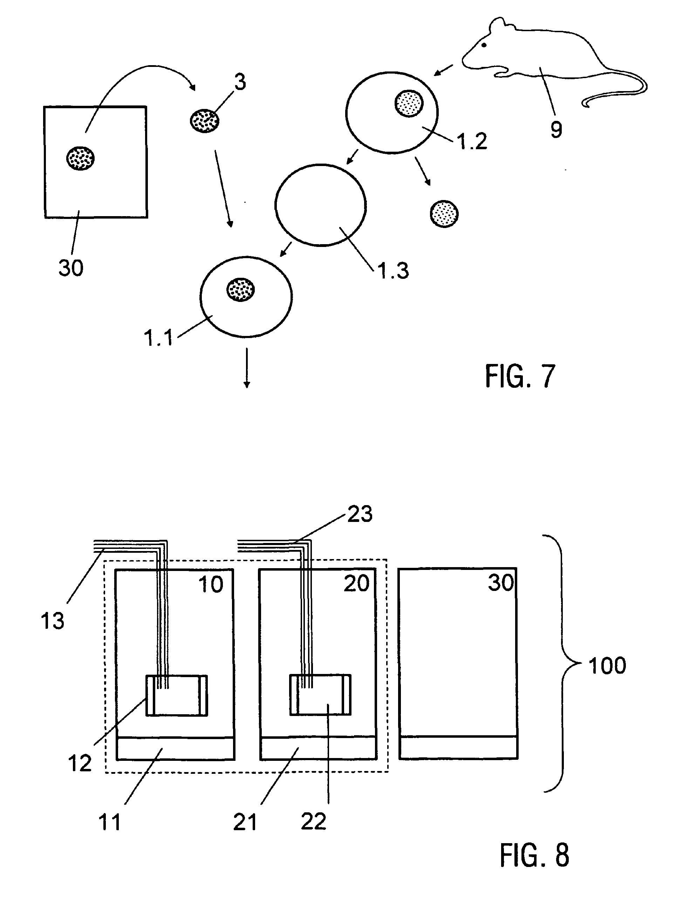

Figur 7 illustriert schematisch am Beispiel von Eizellen der Maus, wie aus einem Zellkern 3, der dem erfindungsgemäßen Konservierungsverfahren unterzogen wurde, eine vitale, lebensfähige Zelle 1.1 erzeugt wird. Von einer Maus 9 werden frische Eizellen 1.2 gewonnen, die mit einem an sich bekannten Verfahren entkernt werden. Der konservierte Zellkern 3 wird der Konservierungseinrichtung 30 entnommen und mit einem ebenfalls an sich bekannten Kerntransfer-Verfahren in die entkernte Zelle 1.3 eingeführt. Die dabei gewonnene Zelle 1.1 wird anschließend einem Kultivierungsverfahren, einschließlich einer Vermehrung und einem Wachstum von Zellen, unterzogen. Abweichend von dem gezeigten Verfahren kann vorgesehen sein, dass der aufgetaute Zellkern nicht in frische Eizellen, sondern aufgetaute, entkernte Eizellen transferiert wird.

Figur 8 zeigt schematisch eine Kryokonservierungs-Vorrichtung 100 mit einer Präparationseinrichtung 10, einer Dehydrierungseinrichtung 20 und einer Konservierungseinrichtung 30. Die Präparations- und Dehydrierungseinrichtungen 10, 20 können durch eine gemeinsame Komponente gebildet werden (siehe gestrichelter Rahmen). Die Präparations- und Dehydrierungseinrichtungen 10, 20 enthalten jeweils eine steuerbare Kühleinrichtung 11, 21, eine Probenaufnahme 12, 22 und eine Leitungseinrichtung 13, 23, mit der Substanzen zur Probe zugeführt oder von dieser abgeführt werden können. Die Konservierungseinrichtung 30 ist aufgebaut, wie dies von der herkömmlichen Kryokonservierung bekannt ist. Sie umfasst zum Beispiel einen Kryotank zur Aufnahme von flüssigem Stickstoff, wobei die Probe mit den gefrorenen Zellkernen im flüssigen Stickstoff oder im Dampf des flüssigen Stickstoffs gelagert werden.

Wenn mehrere Zellbestandteile voneinander isoliert dehydriert und eingefroren werden, ist die in Figur 8 gezeigte Kryokonservierungsvorrichtung 100 so zu modifizieren, dass mehrere Dehydrierungseinrichtungen 20 und mehrere Konservierungseinrichtungen 30 zur Behandlung jeweils verschiedener Zellbestandteile vorgesehen sind.

## Patentansprüche

1. Verfahren zur Kryokonservierung von biologischem Material, das biologische Zellen (1) mit Zellmembranen (2), Zellkernen (3), Zytoplasma (4) und Zellorganellen (5) enthält, mit den Schritten:
- Präparation der biologischen Zellen (1) derart, dass die Zellmembranen (2) unterbrochen werden,
- Dehydrierung der Zellkerne (3) wobei die Dehydrierung eine Verringerung des Wasseranteils umfasst, und
- Einstellung von Konservierungsbedingungen, unter denen die Zellkerne (3) einen kryokonservierten Zustand aufweisen.

2. Verfahren gemäß Anspruch 1, bei dem die Präparation der biologischen Zellen (1) eine Unterbrechung der Zellmembran derart umfasst, dass die Vitalität der Zelle verloren geht.

3. Verfahren gemäß Anspruch 1 oder 2, bei dem die Präparation der biologischen Zellen (1) mindestens einen der Schritte umfasst:
- Abkühlung der biologischen Zellen (1),
- mechanische Zerstörung der Zellmembranen (2),
- chemische Zerstörung der Zellmembranen (2),
- osmotische Zerstörung der Zellmembranen (2),
- Zerstörung von Zytoplasmabestandteilen der biologischen Zellen (1) in der Umgebung der Zellkerne (3),
- Zerkleinerung von biologischem Zellmaterial, das die biologischen Zellen (1) enthält, im gefrorenen Zustand, und
- Trennung der Zellkerne (3) von den übrigen Bestandteilen der biologischen Zellen.

4. Verfahren gemäß einem der vorhergehenden Ansprüche, bei dem die Dehydrierung der Zellkerne (3) mindestens einen der Schritte umfasst:
- Einstellung einer Dehydrierungstemperatur, bei der eine Umkristallisierung von gefrorenem Wasser in der Umgebung der Zellkerne (3) erfolgt,
- Bereitstellung einer Dehydrierungssubstanz, welche die Dehydrierung der Zellkerne (3) bewirkt, in der Umgebung der Zellkerne (3),
- Bereitstellung einer Stabilisierungssubstanz, die in die Zellkerne (3) eindringt und in diesen Wasser verdrängt, und
- Sublimieren von Wasser aus der Umgebung der Zellkerne (3) im gefrorenen Zustand unter erniedrigtem Druck.

5. Verfahren gemäß Anspruch 4, bei dem
- die Dehydrierungstemperatur im Temperaturbereich unterhalb 0°C und oberhalb - 80°C, insbesondere oberhalb - 40°C eingestellt wird, und/oder
- ein Dehydrierungstemperaturzyklus eingestellt wird, in dem mehrfach die Dehydrierungstemperatur verändert und/oder eine erhöhte Temperatur oberhalb des Gefrierpunkts von Wasser eingestellt wird.

6. Verfahren gemäß Anspruch 5, bei dem
- während der Einstellung der erhöhten Temperatur oberhalb des Gefrierpunkts von Wasser ein Stoffaustausch mit der Umgebung der Zellkerne (3) erfolgt.

7. Verfahren gemäß Anspruch 4, bei dem
- die Dehydrierungssubstanz aus der Gruppe von Substanzen gewählt ist, die Alkohole, Proteine, Zucker, Elektrolyte und Polymere umfasst, und/oder
- die Stabilisierungssubstanz aus der Gruppe gewählt ist, die Alginat, Nanopartikel, Matrizen, Zellulose, Polymere, und Gele umfasst.

8. Verfahren gemäß einem der vorhergehenden Ansprüche, bei dem
- die Dehydrierung der Zellkerne (3) erfolgt, während sich die Zellkerne (3) in biologischem Zellmaterial befindet, das Zellbestandteile der biologischen Zellen (1) enthält.

9. Verfahren gemäß einem der Ansprüche 1 bis 7, bei dem
- die Dehydrierung der Zellkerne (3) erfolgt, nachdem die Zellkerne (3) von biologischem Zellmaterial, das die biologischen Zellen (1) enthält, getrennt wurden.

10. Verfahren gemäß einem der vorhergehenden Ansprüche, bei dem die Einstellung der Konservierungsbedingungen umfasst:
- Einstellung einer Lagertemperatur der Zellkerne (3), die unterhalb - 80°C, insbesondere unterhalb - 130°C gewählt ist.

11. Verfahren gemäß einem der vorhergehenden Ansprüche, mit mindestens einem der Schritte:
- Verdichtung der Zellkerne (3), und
- Einzelablage der Zellkerne (3), und
- mindestens eines von den Zellmembranen (2), Zytoplasma (4), Zellorganellen (5) und Teilen von diesen werden der Dehydrierung und der Kryokonservierung unterzogen.

12. Verfahren gemäß Anspruch 11, bei dem:
- die Zellkerne (3), die Zellmembranen (2), Zytoplasma (4), Zellorganellen (5) und/oder Teile von diesen voneinander getrennt und getrennt von den Zellkernen (3) kryokonserviert werden.

13. Vorrichtung (100) zur Kryokonservierung von Zellkernen (3) biologischer Zellen (1), umfassend:
- eine Präparationseinrichtung (10), die zur Präparation der biologischen Zellen (1) derart vorgesehen ist, dass Zellmembranen (2) der biologischen Zellen (1) unterbrochen werden,
- eine Dehydrierungseinrichtung (20), die zur Dehydrierung der Zellkerne (3) vorgesehen ist wobei die Dehydrierung eine Verringerung des Wasseranteils umfasst, und
- eine Konservierungseinrichtung (30), die zur Einstellung von Bedingungen vorgesehen ist, unter denen die Zellkerne (3) einen kryokonservierten Zustand aufweisen.

14. Vorrichtung gemäß Anspruch 13, bei der
- mehrere Konservierungseinrichtungen (30) vorgesehen sind, die zur Einstellung von Bedingungen eingerichtet sind, unter denen mindestens eines von den Zellmembranen (2), Zytoplasma (4), Zellorganellen (5) und Teilen von diesen einen kryokonservierten Zustand aufweisen.

## Claims

1. A method for cryopreservation of biological material, which contains biological cells (1) with cell membranes (2), cell nuclei (3), cytoplasm (4) and cell organelles (5), with the steps of:
- preparation the biological cells (1) in such a manner that the cell membranes (2) are interrupted,
- dehydration the cells (3), wherein the dehydration comprises reducing the water content, and
- setting preserving conditions, under which the cell nuclei (3) have a cryopreserved state.

2. The method according to Claim 1, in which the preparation of the biological cells (1) comprises an interruption of the cell membrane such that the vitality of the cell is lost.

3. The method according to Claim 1 or 2, in which the preparation of the biological cells (1) comprises at least one of the steps of:
- cooling the biological cells (1),
- mechanically destroying the cell membranes (2),
- chemically destroying the cell membranes (2),
- osmotically destroying the cell membranes (2),
- destroying cytoplasm constituents of the biological cells (1) in the surroundings of the cell membranes (3),
- comminuting biological cell material which contains the biological cells (1) in the frozen state, and
- separating the cell nuclei (3) from the remaining constituents of the biological cells.

4. The method according to any one of the preceding claims, in which dehydration of the cell nuclei (3) comprises at least one of the steps of:
- setting a dehydration temperature at which recrystallization of frozen water takes place in the surroundings of the cell nuclei (3),
- providing a dehydration substance which effects the dehydration of the cell nuclei (3) in the surroundings of the cell nuclei (3),
- providing a stabilizing substance which penetrates into the cell nuclei (3) and pushes water out of them, and
- sublimating water out of the surroundings of the cell nuclei (3) in the frozen state at reduced pressure.

5. The method according to claim 4, in which
- the dehydration temperature is set in the temperature range below 0°C and above -80°C, in particular above -40°C, and/or
- a dehydration temperature cycle is set, in which the dehydration temperature is changed and/or an increased temperature above the freezing point of water is set multiple times.

6. The method according to claim 5, in which
- during the setting of the increased temperature above the freezing point of water, a material exchange with the surroundings of the cell nuclei (3) takes place.

7. The method according to claim 4, in which
- the dehydration substance is selected from the group of substances comprising alcohols, proteins, sugar, electrolytes and polymers, and/or
- the stabilizing substance is selected from the group comprising alginate, nanoparticles, matrices, cellulose, polymers and gels.

8. The method according to any one of the preceding claims, in which
- the dehydration of the cell nuclei (3) takes place whilst the cell nuclei (3) are located in the biological cell material which contains cell constituents of the biological cells (1).

9. The method according to any one of claims 1 to 7, in which
- the dehydration of the cell nuclei (3) takes place after the cell nuclei (3) have been separated from the biological cell material which contains the biological cells (1).

10. The method according to any one of the preceding claims, in which the setting of the preserving conditions comprises:
- setting a storage temperature of the cell nuclei (3) which is chosen to be below -80°C, particularly below -130°C.

11. The method according to any one of the preceding claims comprising at least one of the steps of:
- compressing the cell nuclei (3), and
- individual deposition of the cell nuclei (3), and
- subjecting at least one of the the cell membranes (2), cytoplasm (4), cell organelles (5) and parts of the same to dehydration and cryopreservation.

12. The method according to claim 11, wherein:
- the cell nuclei (3), the cell membranes (2), cytoplasm (4), cell organelles (5) and/or parts of the same are separated from one another and cryopreserved separately from the cell nuclei (3).

13. A device (100) for the cryopreservation of cell nuclei (3) of biological cells (1), comprising:
- a preparation apparatus (10) which is provided for preparing the biological cells (1) in such a manner that cell membranes (2) of the biological cells (1) are interrupted,
- a dehydration apparatus (20), which is provided for a dehydration of the cells nuclei (3), wherein the dehydration comprises reducing the water content, and
- a preservation apparatus (30), which is provided for setting conditions, under which the cell nuclei (3) have a cryopreserved state.

14. The device according to claim 13, in which
- a plurality of preservation apparatuses (30) are provided, which are set up for setting conditions under which at least one of the cell membranes (2), cytoplasm (4), cell organelles (5) and parts of the same have a cryopreserved state.

## Revendications

1. Procédé de cryoconservation de matériau biologique, qui contient des cellules biologiques (1) avec des membranes cellulaires (2), des noyaux cellulaires (3), des cytoplasmes (4) et des organelles cellulaires (5), comportant les étapes de :
- préparation des cellules biologiques (1) de telle sorte que la membrane cellulaire (2) soit rompue,
- déshydrogénation des noyaux cellulaires (3), la déshydrogénation comprenant une réduction de la teneur en eau, et
- ajustement des conditions de conservation dans lesquelles les noyaux cellulaires (3) présentent un état cryoconservé.

2. Procédé selon la revendication 1, dans lequel la préparation des cellules biologiques (1) comprend une rupture de la membrane cellulaire, de telle sorte que la vitalité des cellules soit perdue.

3. Procédé selon la revendication 1 ou 2, dans lequel la préparation des cellules biologiques (1) comprend au moins l'une des étapes de :
- refroidissement des cellules biologiques (1),
- destruction mécanique des membranes cellulaires (2),
- destruction chimique des membranes cellulaires (2),
- destruction osmotique des membranes cellulaires (2),
- destruction des composants cytoplasmiques des cellules biologiques (1) dans l'environnement des noyaux cellulaires (3),
- destruction du matériau cellulaire biologique qui contient les cellules biologiques (1), à l'état congelé, et
- séparation des noyaux cellulaires (3) des autres composants des cellules biologiques.

4. Procédé selon l'une des revendications précédentes, dans lequel la déshydrogénation des noyaux cellulaires (3) comprend au moins l'une des étapes suivantes :
- ajustement d'une température de déshydrogénation, dans lequel une recristallisation de l'eau congelée s'effectue dans l'environnement des noyaux cellulaires (3),
- mise à disposition d'une substance de déshydrogénation qui entraîne la déshydrogénation des noyaux cellulaires (3), dans l'environnement des noyaux cellulaires (3),
- mise à disposition d'une substance stabilisante qui pénètre dans les noyaux cellulaires (3) et repousse l'eau dans ceux-ci, et
- sublimation de l'eau de l'environnement des noyaux cellulaires (3) à l'état congelé sous pression réduite.

5. Procédé selon la revendication 4, dans lequel
- la température de déshydrogénation est ajustée dans une plage de températures inférieure à 0° C et supérieure à -80° C, en particulier, supérieure à - 40° C, et/ou
- un cycle de température de déshydrogénation est instauré, dans lequel la température de déshydrogénation est modifiée plusieurs fois et/ou une température supérieure est ajustée au-dessus du point de gélification de l'eau.

6. Procédé selon la revendication 5, dans lequel
- pendant l'ajustement de la température supérieure au-dessus du point de gélification de l'eau, un échange de substance s'effectue avec l'environnement des noyaux cellulaires (3).

7. Procédé selon la revendication 4, dans lequel
- la substance de déshydrogénation est choisie dans le groupe de substances qui comprend les alcools, les protéines, les sucres, les électrolytes et les polymères, et/ou
- la substance stabilisante est choisie dans le groupe comprenant l'alginate, des nanoparticules, des matrices, de la cellulose, des polymères et des gels.

8. Procédé selon l'une des revendications précédentes, dans lequel
- la déshydrogénation des noyaux cellulaires (3) s'effectue pendant que les noyaux cellulaires (3) se trouvent dans le matériau cellulaire biologique qui contient des composants cellulaires des cellules biologiques (1).

9. Procédé selon l'une des revendications 1 à 7, dans lequel
- la déshydrogénation des noyaux cellulaires (3) s'effectue après que les noyaux cellulaires (3) ont été séparés du matériau cellulaire biologique qui contient les cellules biologiques (1).

10. Procédé selon l'une des revendications précédentes, dans lequel l'ajustement des conditions de conservation comprend:
- l'ajustement d'une température de stockage des noyaux cellulaires (3) qui est choisie à moins de - 80° C, en particulier, à moins de -130° C.

11. Procédé selon l'une des revendications précédentes, comprenant au moins l'une des étapes suivantes :
- agglomération des noyaux cellulaires (3), et
- dépôt individuel des noyaux cellulaires (3), et
- au moins un élément parmi les membranes cellulaires (2), les cytoplasmes (4), les organelles cellulaires (5) et des parties de ceux-ci est soumis à la déshydrogénation et à la cryoconservation.

12. Procédé selon la revendication 11, dans lequel :
- les noyaux cellulaires (3), les membranes cellulaires (2), les cytoplasmes (4), les organelles cellulaires (5) et/ou des parties de ceux-ci sont séparés les uns des autres et sont cryoconservés séparément des noyaux cellulaires (3).

13. Dispositif (100) de cryoconservation de noyaux cellulaires (3) de cellules biologiques (1), comprenant :
- un équipement de préparation (10) qui est prévu pour la préparation des cellules biologiques (1) de telle sorte que des membranes cellulaires (2) des cellules biologiques (1) soient rompues ;
- un équipement de déshydrogénation (20) qui est prévu pour la déshydrogénation des noyaux cellulaires (3), la déshydrogénation comprenant une réduction de la teneur en eau, et
- un équipement de conservation (30) qui est prévu pour l'ajustement des conditions dans lesquelles les noyaux cellulaires (3) présentent un état cryoconservé.

14. Dispositif selon la revendication 13, dans lequel
- plusieurs dispositifs de conservation (30) sont prévus, qui sont conçus pour l'ajustement des conditions dans lesquelles au moins un élément parmi les membranes cellulaires (2), les cytoplasmes (4), les organelles cellulaires (5) et des parties de ceux-ci présente un état cryoconservé.
